# DEMANDE DE BREVET EUROPEEN

(11) **EP 4 538 084 A2**
(43) Date de publication de la demande: **16.04.2025**
(21) Numéro de dépôt: 25158095.7
(22) Date de dépôt: 14.01.2020
(51) Int. Cl.: B60K 6/405

(54) **MODULE DE PROPULSION D'UN VÉHICULE ÉLECTRIQUE OU HYBRIDE**

(30) Priorité: 22.01.2019 FR 1900545
(62) Demande divisionnaire de: 20702216.1
(71) Demandeur: VALEO EMBRAYAGES, 80009 Amiens (FR)
(72) Inventeur: ARMIROLI, Paul, 95892 CERGY PONTOISE (FR); LOUISE, Christophe, 95892 CERGY PONTOISE (FR); BOIDIN, Guillaume, 95892 CERGY PONTOISE (FR); JIN, Yejin, 95892 CERGY PONTOISE (FR)
(74) Mandataire: Valeo Powertrain Systems

(57) **Abrégé**

Module (1) de propulsion d'un véhicule hybride ou électrique, comprenant :
une machine électrique de propulsion (2) ayant un rotor et un stator,
un convertisseur de tension (3) permettant d'alimenter électriquement le stator à partir de l'énergie électrique fournie par une unité de stockage d'énergie électrique, et
un système de réduction (5) recevant le couple fourni par le rotor,
le module (1) comprenant une première partie de boîtier (10) recevant la machine électrique de propulsion (2) et le convertisseur de tension (4), et une deuxième partie de boîtier (11) recevant le système de réduction (5), le module (1) définissant un circuit de refroidissement (15) permettant la circulation d'un même liquide dans la première (10) et la deuxième (11) partie de boîtier pour refroidir au moins la machine électrique de propulsion (2) et le convertisseur de tension (3), tout ou partie de la surface de la deuxième partie de boîtier (11) portant des reliefs de refroidissement (31), permettant de dissiper vers l'extérieur du module (1) la chaleur récupérée par le liquide.
Figure pour l'abrégé : Figure 1

## Description

La présente invention concerne un module de propulsion d'un véhicule électrique ou hybride. Ce module comprend un convertisseur de tension convertissant l'énergie électrique d'une unité de stockage d'énergie électrique embarquée sur le véhicule, une machine électrique de propulsion et un système de réduction permettant d'adapter la vitesse de rotation de la machine électrique de propulsion à la vitesse requise pour le véhicule.

Il est connu de munir un tel module d'un circuit d'eau permettant de refroidir la machine électrique de propulsion et le convertisseur de tension.

La présente invention a pour objet de fournir un module de propulsion de véhicule électrique ou hybride dont la machine électrique de propulsion et le convertisseur de tension soient refroidis de façon efficace, sans pour autant générer trop d'encombrement.

L'invention y parvient, selon l'un de ses aspects, à l'aide d'un module de propulsion d'un véhicule hybride ou électrique, comprenant :
- une machine électrique de propulsion ayant un rotor et un stator,
- un convertisseur de tension permettant d'alimenter électriquement le stator à partir de l'énergie électrique fournie par une unité de stockage d'énergie électrique, et
- un système de réduction recevant le couple fourni par le rotor,
le module comprenant une première partie de boîtier recevant la machine électrique de propulsion et le convertisseur de tension, et une deuxième partie de boîtier recevant le système de réduction, le module définissant un circuit de refroidissement permettant la circulation d'un même liquide dans la première et la deuxième partie de boîtier pour refroidir au moins la machine électrique de propulsion et le convertisseur de tension, tout ou partie de la surface de la deuxième partie de boîtier portant des reliefs de refroidissement, permettant de dissiper vers l'extérieur du module la chaleur récupérée par le liquide.

Selon l'invention, on utilise la surface de la partie de boîtier recevant le système de réduction pour porter des reliefs de façon à dissiper les calories vers l'extérieur du module, ces calories ayant été préalablement collectées par le liquide circulant dans la première et dans la deuxième partie de boîtier. L'équipement de la deuxième partie de boîtier en reliefs de refroidissement permet d'augmenter la surface d'échange avec l'air et donc la dissipation des calories vers l'extérieur du module, améliorant ainsi le refroidissement par l'air. La deuxième partie de boîtier joue ainsi, seule ou en combinaison avec d'autres parties, le rôle de radiateur. On évite alors d'avoir recours à un circuit d'eau additionnel qui serait par exemple dédié au refroidissement du convertisseur de tension, et ainsi les inconvénients associés en termes d'encombrement et d'étanchéité. Par ailleurs, le passage dans la deuxième partie de boîtier du liquide préalablement réchauffé par la machine électrique de propulsion et le convertisseur de tension permet d'améliorer le rendement du système de réduction disposé dans cette deuxième partie de boîtier. Le liquide de refroidissement circulant dans le module peut être de l'huile. Le système de réduction comprend par exemple plusieurs pignons et l'huile permet de lubrifier ces pignons.

Le module est avantageusement dépourvu de circuit additionnel de refroidissement, notamment d'un circuit additionnel de refroidissement parcouru par de l'eau.

Le liquide de refroidissement peut être directement au contact du rotor et/ou du stator de la machine électrique de propulsion et/ou être directement au contact de tout ou partie du système de réduction, notamment de tout ou partie des pignons de ce système de réduction lorsque de tels pignons sont présents.

Des reliefs de refroidissement peuvent être portés par la première partie de boîtier tandis que d'autres reliefs de refroidissement peuvent être portés par la deuxième partie de boîtier. Toute la première partie de boîtier porte par exemple des reliefs de refroidissement et toute la deuxième partie de boîtier porte par exemple d'autres reliefs de refroidissements.

Qu'ils soient portés par la première ou par la deuxième partie de boîtier, les reliefs de refroidissement peuvent être des ailettes. Ces ailettes peuvent être disposées selon des rangées, et un pas, constant ou non, peut exister entre deux rangées adjacentes. Ces rangées peuvent ou non toutes présenter la même orientation. Le cas échéant, de mêmes ailettes peuvent s'étendre d'une part sur la première partie de boîtier et d'autre part sur la deuxième partie de boîtier.

Les reliefs de refroidissement sont par exemple réalisés d'une seule pièce avec la partie de boîtier portant ces derniers. En variante, ces reliefs de refroidissement sont rapportés sur cette partie de boîtier.

Chaque partie de boîtier précitée peut être monobloc ou être formée par l'assemblage de sous-parties de boîtiers.

Dans tout ce qui précède, le module peut comprendre une pompe montée dans le circuit de refroidissement. Cette pompe peut forcer la circulation du liquide, notamment de l'huile, dans le circuit de refroidissement, assurant ainsi un refroidissement homogène du convertisseur de tension et de la machine électrique par le liquide, notamment l'huile.

Lorsqu'une telle pompe est présente, un système de commande de cette pompe peut également être présent, et ce système de commande peut être monté en tout ou partie sur la carte électronique du convertisseur de tension. On ajoute ainsi une autre fonctionnalité à cette carte électronique, permettant de réduire l'encombrement associé au module.

Dans tout ce qui précède, le module peut comprendre un capteur de température du liquide circulant dans le circuit de refroidissement, et l'électronique de ce capteur peut être montée sur la carte électronique du convertisseur de tension. Là encore, l'ajout d'une fonctionnalité à la carte électronique peut permettre de réduire l'encombrement associé au module. En variante, l'électronique du capteur peut être déportée par rapport à la carte électronique du convertisseur de tension et reliée à cette dernière par des câbles.

Dans tout ce qui précède, le module peut comprendre un filtre des particules métalliques résultant de l'usure du système de réduction. Lorsque le rotor de la machine électrique de propulsion est un rotor à aimants permanents, ce filtre peut permettre de protéger les aimants.

Le cas échéant, lorsque le filtre des particules métalliques et la pompe sont présents, ces derniers peuvent être disposés dans une portion de liaison du circuit de refroidissement entre la première et la deuxième partie de boîtier, cette portion de liaison étant par exemple parcourue par le liquide circulant de la deuxième partie de boîtier vers la première partie de boîtier.

Dans tout ce qui précède, le circuit de refroidissement peut n'être directement au contact que du stator de la machine électrique de propulsion, et non de son rotor, ou n'être directement au contact que du rotor de la machine électrique de propulsion, et non de son stator.

En variante, dans tout ce qui précède, le circuit de refroidissement peut comprendre une première branche directement au contact du stator et une deuxième branche, parallèle à la première branche, et directement au contact du rotor. Selon cette variante, le circuit de refroidissement vient ainsi directement au contact du stator via sa première branche et également directement au contact du rotor via sa deuxième branche.

Dans tout ce qui précède, le circuit de refroidissement peut comprendre une portion de liaison entre la première et la deuxième partie de boîtier, cette portion de liaison permettant ou non une dissipation additionnelle de chaleur vers l'extérieur du module. Cette portion de liaison peut être parcourue par le liquide circulant de la première partie de boîtier vers la deuxième partie de boîtier. Lorsqu'une telle dissipation est possible, elle peut s'effectuer via un radiateur fixé sur cette portion de liaison, ou cette portion de liaison peut être réalisée sous la forme d'un serpentin. Le cas échéant, le module peut comprendre un ventilateur favorisant cette dissipation additionnelle. Un système de commande de ce ventilateur peut être présent, et ce système de commande peut être monté en tout ou partie sur la carte électronique du convertisseur de tension. On ajoute ainsi une autre fonctionnalité à cette carte électronique, permettant de réduire l'encombrement associé au module.

Dans tout ce qui précède, le module peut comprendre uniquement trois interfaces avec l'extérieur, à savoir une première interface pour l'alimentation en énergie électrique du module depuis l'unité de stockage d'énergie électrique, une deuxième interface pour la transmission du couple généré par le module, et une troisième interface pour l'échange d'informations pour commander le module. Dans tout ce qui précède, la première partie de boîtier et la deuxième partie de boîtier peuvent être rigidement fixées entre elles, par exemple par l'intermédiaire de vis.

Dans tout ce qui précède, la machine électrique de propulsion peut être une machine synchrone ou une machine asynchrone. Lorsqu'il s'agit d'une machine synchrone, elle peut être à rotor bobiné ou à rotor à aimants permanents. La puissance nominale fournie par la machine électrique de propulsion peut être comprise entre 10 et 35 kW, par exemple de l'ordre de 15 kW.

Le système de réduction peut comprendre entre 2 et 15 pignons. Le système de réduction peut définir un unique rapport, la valeur de cet unique rapport étant par exemple comprise entre 2 et 50. En variante, le système de réduction peut être configuré pour définir trois rapports distincts.

Le convertisseur de tension peut être un onduleur/redresseur, mettant par exemple en œuvre des transistors à effet de champ, comme des transistors MOSFET, ou des IGBT.

L'invention a encore pour objet, selon un autre de ses objets, un ensemble comprenant :
le module tel que défini ci-dessus, et une unité de stockage d'énergie électrique, notamment une unité de stockage d'énergie électrique fournissant une tension nominale comprise entre 42V et 54V, par exemple de 48V.

Le module précité peut être particulièrement adapté à une unité de stockage d'énergie électrique fournissant une tension nominale comprise entre 42V et 54V, par exemple de 48V, la chaleur dégagée dans la machine électrique de propulsion et dans le convertisseur de tension pouvant alors être dissipée vers l'extérieur du module à l'aide du liquide circulant dans ce dernier et des reliefs de refroidissement, sans qu'il soit nécessaire d'avoir recours au circuit d'eau additionnel. Dans des variantes, l'unité de stockage d'énergie électrique peut fournir une tension nominale plus élevée, par exemple jusqu'à une valeur de 400V.

Un tel ensemble peut encore comprendre au moins une roue à laquelle est couplé le module de manière à ce que le couple généré par le module soit appliqué à la roue pour entraîner cette roue. Le module peut être soit directement couplé à la roue, soit être monté sur un différentiel de train avant ou sur un différentiel de train arrière de véhicule. Le cas échéant, plusieurs modules similaires peuvent être embarqués sur le véhicule.

D'autres applications du module selon l'invention sont possibles.

Brève description des dessins :
- la [Fig. 1] représente de façon très schématique un module selon un exemple de mise en œuvre de l'invention,
- la [Fig. 2] représente de façon plus concrète le module de la figure 1, et
- les [Fig. 3] et [Fig. 4] représentent de façon schématique deux variantes d'un module dans une même application dans un véhicule.

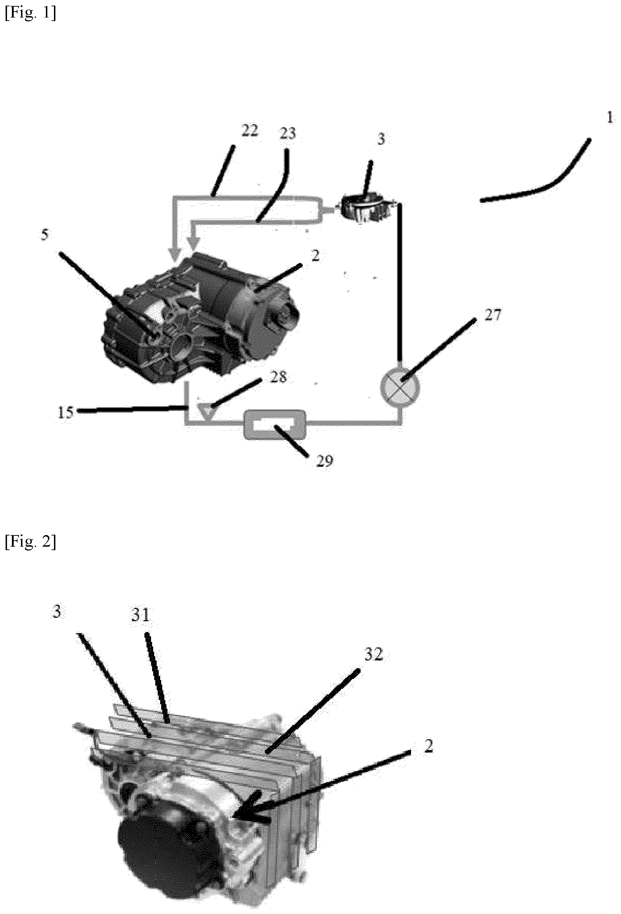

On a représenté de façon schématique en référence à la figure 1 un module 1 selon un exemple de mise en œuvre de l'invention. Ce module 1 sert à la propulsion d'un véhicule électrique ou hybride. Ce module 1 comprend ici une machine électrique de propulsion 2 ayant un rotor et un stator, un convertisseur de tension 3 permettant d'alimenter électriquement le stator à partir de l'énergie électrique fournie par une unité de stockage d'énergie électrique, et un système de réduction 5 recevant le couple fourni par le rotor en vue de propulser le véhicule. Sur la figure 1, le convertisseur de tension 3 est représenté comme étant à distance de la machine électrique de propulsion 2 et du système de réduction, pour des raisons de clarté du dessin, mais le convertisseur de tension 3, la machine électrique de propulsion 2 et le système de réduction 5 forment en réalité un même bloc dans l'exemple considéré. Dans l'exemple considéré, la machine électrique de propulsion 2 est une machine synchrone à rotor à aimants permanents, fournissant une puissance nominale comprise entre 10 kW et 35 kW. Le stator de cette machine synchrone peut comprendre un enroulement électrique formé par des conducteurs bobinés sur la carcasse du stator ou par des épingles reliées entre elles. L'enroulement électrique de stator est par exemple un enroulement triphasé ou un enroulement formé par deux enroulements triphasés.

Dans l'exemple considéré, le convertisseur de tension 3 est un onduleur/redresseur permettant de convertir la tension continue de l'unité de stockage d'énergie électrique en une tension alternative pour alimenter électriquement le stator de la machine électrique de propulsion 2 dans un mode de propulsion du véhicule, et permettant de redresser la tension alternative induite aux bornes du stator de la machine électrique de propulsion 2 dans un mode régénératif. Le convertisseur de tension 3 met par exemple en œuvre plusieurs bras de commutation, chaque bras comprenant des interrupteurs commandables, par exemple des transistors à effet de champ ou des transistors IGBT.

Le convertisseur de tension 3 reçoit ou applique selon le mode propulsion ou régénératif une tension à une unité de stockage d'énergie électrique qui a par exemple une tension nominale comprise entre 42V et 54V, par exemple une tension nominale de 48V.

Le système de réduction 5 comprend dans l'exemple décrit plusieurs pignons engrenant pour transmettre le couple fourni par la machine électrique 2 vers les roues du véhicule. Les pignons du système de réduction 5 sont par exemple configurés pour qu'un unique rapport soit possible, ou en variante pour que deux rapports distincts ou trois rapports distincts soient possibles.

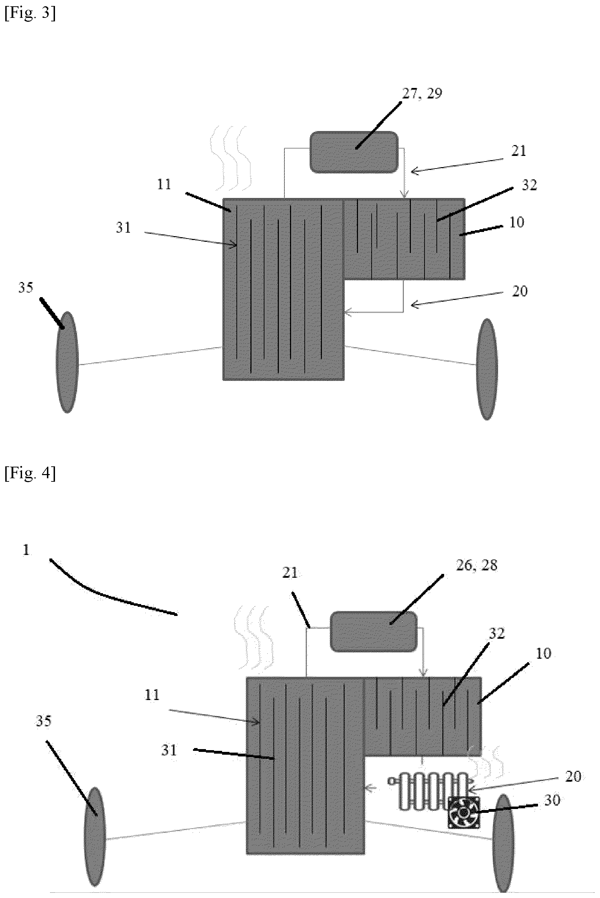

Dans l'exemple considéré, le module 1 est implanté sur un train de véhicule, s'agissant du train avant ou du train arrière du véhicule, comme représenté sur les figures 3 et 4. Ce module 1 est par exemple vissé sur ce train ou lié à travers des silent blocs sur ce train. Dans cette implantation, le couple en sortie du système de réduction 5 est réparti entre les différentes roues 35 de ce train par un différentiel.

On va maintenant décrire plus en détail le module 1. Ce module 1 comprend une première partie de boîtier 10 recevant la machine électrique de propulsion 2 et le convertisseur de tension 3, comme on le voit clairement sur la figure 2. Cette première partie de boîtier 10 peut être monobloc ou être formée par l'assemblage de sous-parties de boîtier entre elles. Le module 1 comprend également une deuxième partie de boîtier 11 recevant le système de réduction 5. La première partie de boîtier 10 et la deuxième partie de boîtier 11 sont ici rigidement fixées, par exemple via des vis.

Comme on le voit sur la figure 1, le module 1 définit un circuit de refroidissement 15 permettant la circulation d'un même liquide qui est ici de l'huile dans la première 10 et la deuxième 11 partie de boîtier. Ce liquide permet ainsi de refroidir la machine électrique de propulsion 2 et le convertisseur de tension 3 en prélevant des calories à ces derniers.

Le circuit de refroidissement 15 comprend ici :
- une portion à travers la première partie de boîtier 10, pour venir refroidir la machine électrique de propulsion 2 et le convertisseur de tension 3,
- une première portion de liaison 20 entre la première partie de boîtier 10 et la deuxième partie de boîtier 11,
- une portion à travers la deuxième partie de boîtier 11, dans laquelle l'huile peut lubrifier les différents pignons du système de réduction 5, et
- une deuxième portion de liaison 21 entre la deuxième partie de boîtier 11 et la première partie de boîtier 10.

Comme on peut le voir sur figure 1, deux branches en parallèle 22 et 23 peuvent être ménagées dans le circuit de refroidissement 15, de manière à ce que l'huile circule dans la première partie de boîtier directement au contact du rotor et également directement au contact du stator de la machine électrique de propulsion 2. Dans une variante non représentée, le circuit de refroidissement est dépourvu de branches parallèles et seul l'un du rotor et du stator de la machine électrique 2 est directement au contact de l'huile.

Comme on peut le voir sur la figure 1, le circuit de refroidissement peut encore comprendre dans l'exemple considéré :
- une pompe 27 imposant un sens de parcours dans le circuit de refroidissement 15, ici dans la première partie de boîtier 10, puis dans la première portion de liaison 20, puis dans la deuxième partie de boîtier 11, puis dans la deuxième portion de liaison 21, puis à nouveau dans la première partie de boîtier 10,
- un capteur 28 de température du liquide circulant dans le circuit de refroidissement, et
- un filtre 29 des particules métalliques résultant de l'usure du système de réduction 5.

La pompe peut être montée à l'intérieur ou à l'extérieur du module.

Le cas échéant, le système de commande de la pompe 27 peut être monté en tout ou partie sur la carte électronique du convertisseur de tension 3, et l'électronique du capteur 28 peut également être montée sur la carte électronique du convertisseur de tension. On ajoute ainsi plusieurs fonctionnalités à la carte électronique du convertisseur de tension 3 afin de réduire l'encombrement associé au module.

Comme on peut le voir sur les figures 3 et 4, lorsque le circuit de refroidissement 15 comprend la pompe 27 et le filtre 29 précités, ces derniers peuvent être disposés dans la deuxième portion de liaison 21 du circuit, de manière à être disposés en amont des sources de chaleur dans le circuit qui sont formées par la machine électrique de propulsion 2 et le convertisseur de tension 3.

Dans l'exemple de la figure 3, la première portion de liaison 20 du circuit de refroidissement assure une simple fonction de jonction entre les parties de boîtier 10 et 11. Mais l'invention n'y est pas limitée, comme on va maintenant le voir en référence à la figure 4.

Sur la figure 4, et selon une variante, la première portion de liaison 20 permet une dissipation de chaleur vers l'extérieur du module. Cette dissipation est par exemple fournie par un radiateur 30 associé à la première portion de liaison 20 ou via la réalisation de cette première portion de liaison 20 sous la forme d'un serpentin. Afin de renforcer encore cette dissipation de chaleur dans la première portion de liaison, un ventilateur peut être présent sur le module. Le système de commande de ce ventilateur peut être monté en tout ou partie sur la carte électronique du convertisseur de tension 3.

Selon l'invention, le circuit de refroidissement 15 coopère avec des reliefs de refroidissement 31 pour dissiper vers l'extérieur du module 1 la chaleur dégagée par la machine électrique de propulsion 2 et par le convertisseur de tension 3, comme expliqué ci-après.

On constate sur la figure 2 que des reliefs de refroidissement 31 sont portés par la surface de la deuxième partie de boîtier 11. Dans l'exemple considéré, ces reliefs de refroidissement sont des ailettes réalisées d'une seule pièce avec la deuxième partie de boîtier 11.

Comme on peut également le voir sur la figure 2, d'autres reliefs de refroidissement 32, qui sont également des ailettes, sont portés par la surface de la première partie de boîtier 10. La totalité de la surface de la première partie de boîtier 10 et la totalité de la surface de la deuxième partie de boîtier 11 peuvent porter des ailettes. L'emploi d'ailettes permet de favoriser la dissipation vers l'extérieur du module 1 de la chaleur collectée par l'huile lors de son parcours à travers la première partie de boîtier 10 et la deuxième partie de boîtier 11.

Comme on peut le voir sur les figures 3 et 4, les ailettes peuvent toutes avoir la même forme, qu'elles soient portées par la première partie de boîtier 10 ou par la deuxième partie de boîtier 11, et être espacées selon un pas constant. Les ailettes peuvent ou non être disposées en quinconce d'une rangée à l'autre.

Du fait de la présence du liquide circulant à travers la première 10 et la deuxième 11 partie de boîtier et de sa coopération avec les reliefs de refroidissement dont la couverture sur la surface du module est augmentée, il est possible d'éviter le recours à un circuit additionnel de refroidissement, utilisant par exemple de l'eau.

## Revendications

1. Module (1) de propulsion d'un véhicule hybride ou électrique, comprenant :
- une machine électrique de propulsion (2) ayant un rotor et un stator,
- un convertisseur de tension (3) permettant d'alimenter électriquement le stator à partir de l'énergie électrique fournie par une unité de stockage d'énergie électrique, et
- un système de réduction (5) recevant le couple fourni par le rotor,
le module (1) comprenant une première partie de boîtier (10) recevant la machine électrique de propulsion (2) et le convertisseur de tension (3), et une deuxième partie de boîtier (11) recevant le système de réduction (5), le module (1) définissant un circuit de refroidissement (15) permettant la circulation d'un même liquide dans la première (10) et
la deuxième (11) partie de boîtier pour refroidir au moins la machine électrique de propulsion (2) et le convertisseur de tension (3),
tout ou partie de la surface de la deuxième partie de boîtier (11) portant des reliefs de refroidissement (31), permettant de dissiper vers l'extérieur du module (1) la chaleur récupérée par le liquide, les reliefs de refroidissement étant des ailettes.

2. Module selon la revendication 1, les ailettes étant disposées selon des rangées et un pas constant existant entre deux rangées adjacentes.

3. Module selon la revendication 1 ou 2, le module étant dépourvu de circuit additionnel de refroidissement, notamment d'un circuit additionnel de refroidissement parcouru par de l'eau, le liquide de refroidissement étant notamment de l'huile.

4. Module selon l'une quelconque des revendications précédentes, comprenant une pompe (27) montée dans le circuit de refroidissement (15).

5. Module selon la revendication précédente, comprenant un système de commande de la pompe (27), ce système de commande étant monté en tout ou partie sur la carte électronique du convertisseur de tension (3).

6. Module selon l'une quelconque des revendications précédentes, comprenant un capteur (28) de température du liquide circulant dans le circuit de refroidissement (15), l'électronique de ce capteur étant montée sur la carte électronique du convertisseur de tension (3).

7. Module selon l'une quelconque des revendications précédentes, comprenant un filtre (29) des particules métalliques résultant de l'usure du système de réduction (15).

8. Module selon l'une quelconque des revendications précédentes, le liquide de refroidissement étant directement au contact du rotor et/ou du stator de la machine électrique de propulsion (2) et/ou étant directement au contact de tout ou partie du système de réduction (15).

9. Module selon l'une quelconque des revendications précédentes, le circuit de refroidissement (15) n'étant directement au contact que de l'un du stator et du rotor de la machine électrique de propulsion (2).

10. Module selon l'une quelconque des revendications 1 à 9, le circuit de refroidissement (15) comprenant une première branche (22) directement au contact du stator et une deuxième branche (23), parallèle à la première branche (22), et directement au contact du rotor.

11. Module selon l'une quelconque des revendications précédentes, le circuit de refroidissement (15) comprenant une portion de jonction (21) entre la première (10) et la deuxième (11) partie de boîtier, cette portion de jonction (21) permettant une dissipation additionnelle de chaleur à l'extérieur du module (1) via un radiateur (30) ou en étant réalisée sous la forme d'un serpentin.

12. Module selon l'une quelconque des revendications précédentes, comprenant uniquement trois interfaces vers l'extérieur, à savoir une première interface pour l'alimentation en énergie électrique du module (1) depuis l'unité de stockage d'énergie électrique, une deuxième interface pour la transmission du couple généré par la machine électrique de propulsion (3), et une troisième interface pour l'échange d'informations pour commander le module (1).

13. Ensemble comprenant :
- le module (1) selon l'une quelconque des revendications précédentes, et
- une unité de stockage d'énergie, notamment une unité de stockage d'énergie électrique fournissant une tension nominale comprise entre 42V et 54V, par exemple de 48V.

14. Ensemble selon la revendication précédente, comprenant encore une roue à laquelle est couplé le module (1) de manière à ce que le couple généré par le module soit appliqué à la roue pour entraîner cette roue.
